# EUROPEAN PATENT SPECIFICATION

(11) **EP 1 169 817 B1**
(45) Date of publication and mention of the grant of the patent: **08.06.2011**
(21) Application number: 00920080.9
(22) Date of filing: 03.04.2000
(51) Int. Cl.: H04L 12/28, H04L 12/56

(54) **EDGE DEVICE AND METHOD FOR INTERCONNECTING SS7 SIGNALING POINTS (SPS) USING EDGE DEVICE**
NETZPERIPHERIE-VORRICHTUNG UND VERFAHREN ZUM VERBINDEN VON SS7-ZEICHENGABEPUNKTEN UNTER VERWENDUNG DIESER VORRICHTUNG
DISPOSITIF PERIPHERIQUE ET PROCEDE POUR L'INTERCONNEXION DE POINTS DE SIGNALISATION SS7 (SPS) UTILISANT CE DISPOSITIF

(30) Priority: 05.04.1999 US 127889 P; 19.11.1999 US 443712
(43) Date of publication of application: 09.01.2002
(73) Proprietor: Tekelec, Calabasas, CA 91302 (US)
(72) Inventor: MILLER, Paul, Andrew, Raleigh, NC 27614 (US); RAVISHANKAR, Venkataramaiah, Apex, NC 27502 (US)
(74) Representative: Reinhard - Skuhra - Weise & Partner GbR
(86) International application number: PCT/US2000/008837
(87) International publication number: WO 2000/060814

(56) References cited:
- EP-A- 0 853 411
- WO-A-97/11563
- WO-A-97/42774
- US-A- 5 701 301
- US-A- 5 923 659
- US-A- 5 940 598
- US-A- 6 014 379
- AUTHORS NORMAND GLAUDE TOM BLAIN REG CABLE MICROLEGEND TELECOM SYSTEMS INC: "SS7 to IP Signaling Gateway Transport Architecture; draft-glaude-ss7-gw-00.txt;" IETF STANDARD-WORKING-DRAFT, INTERNET ENGINEERING TASK FORCE, IETF, CH, 27 November 1998 (1998-11-27), XP015013655 ISSN: 0000-0004
- MICHAEL MCGREW LUCENT TECHNOLOGIES INC: "Transport SS7 Signalling Over IP; draft-mcgrew-tss7s-00.txt;" IETF STANDARD-WORKING-DRAFT, INTERNET ENGINEERING TASK FORCE, IETF, CH, November 1998 (1998-11), XP015032299 ISSN: 0000-0004
- EL-TOUMI A A ET AL: "INTERCONNECTING SS7 SIGNALING NETWORKS" INTERNATIONAL CONFERENCE ON COMMUNICATIONS. INCLUDING SUPERCOMM TECHNICAL SESSIONS. ATLANTA, APR. 15 - 19, 1990, NEW YORK, IEEE, US, vol. VOL. 2, 15 April 1990 (1990-04-15), pages 589-593, XP000146129

## Description

### Technical Field

The present invention relates to methods and systems for interconnecting SS7 signaling points (SPs). More particularly, the present invention relates to an edge device and a method for interconnecting SS7 SPs using the edge device.

### Background Art

Conventional telecommunications networks typically comprise two distinct communication pathways or sub-networks -- a voice network and a signaling network. These two networks function cooperatively to facilitate calls between users. The voice network is responsible for the transmission of voice (or user data) while the signaling network has a number of responsibilities. These include call setup, call teardown, and database access features.

In simple terms, the signaling network facilitates the dynamic linking together of discrete voice-type communication circuits so that a voice-type connection can be established between two parties. These functions are referred to as call setup and call teardown. The signaling network also provides a framework through which non-voice related information can be transported. This data and transport functionality, however, is transparent to the users. This signaling technique is often referred to as out-of-band signaling where the term "band" indicates the voice band. Examples of non-voice data transport include 800 number database access, calling card verification services, and caller ID services.

In order to ensure consistent and reliable communication across the signaling network infrastructure, a common or standard digital signaling protocol was established by the International Telecommunications Union (ITU) in the mid 1960's. This protocol was known as Signaling System 6 (SS6) and has since evolved into the slightly more sophisticated SS7 currently in use.

As a protocol, SS7 defines the hierarchy or structure of the information contained within a message or data packet. This internal data structure is often referred to as the protocol stack, which is comprised of a number of well defined strata or layers. In general terms, the SS7 protocol stack consists of 4 levels or layers: the physical layer, the data link layer, the network layer, and the user part layer. It will be appreciated that communication networks operating outside of the United States often refer to the SS7 protocol and network as Common Channel Signaling # 7 (CCS#7). For simplicity, the term SS7 is used herein. However, it is understood that embodiments of the present invention can be used equally in CCS7 or SS7 networks.

An SS7 network includes a plurality of SS7 nodes, commonly referred to as signaling points (SPs), which include service switching points (SSPs), signal transfer points (STPs) and service control points (SCPs).

An SSP is typically installed in tandem or Class 5 offices and is capable of handling both in-band signaling and SS7 signaling. An SSP might be a customer switch, an end-office, an access tandem and/or a tandem.

An STP transfers signaling messages from one signaling link to another. STPs are packet switches and are generally installed as mated pairs, each mate of the pair being located remotely from the other to ensure redundancy and reliability in the event one is damaged, for example by a natural disaster, as well as load sharing. Thus, for example, one STP of the pair might be located in North Carolina while the other of the pair is located in Illinois, each one typically operating nominally at no more than 40% of its maximum processing capacity.

Finally, SCPs control access to databases such as 800 number translation, 800 number carrier identification, credit card verification and the like. SCPs may include a front-end computer that received database queries from SS7 SPs and provides responses to the queries.

Each of the SP's above is interconnected using SS7 signaling links. Signaling links are transmission facilities used to connect SPs together. Conventional SS7 signaling links are dedicated, bidirectional facilities operating at a fixed-bandwidth, for example 56 kbps in the United States and Canada, and 64 kbps when clear channel capability is required. Every link will typically have a mate for redundancy and enhanced network integrity.

Dedicated SS7 links that connect an STP to other SPs within an SS7 network can be capital intensive and expensive to maintain. Moreover, because redundant SS7 data links are typically used, their maintenance adds to the capital intensity and expense.

These expenses create a formidable barrier to further expansion of wired telephone networks as well as cellular telephone networks. Consider, for example, a telecommunications carrier or service provider that desires to enter a market and provide telephone service to customers. The provider must be connected to both the signaling and voice networks.

With regard to the signaling network, the necessary connectivity involves establishing at least one communication link between an end office, or SSP, and a pair of STPs. This task can be accomplished through the use of an intermediate, non-intelligent multiplexing node; that is, the node cannot discriminate information, but merely passes it. Such multiplexing nodes concentrate information onto and distribute information off of the SS7 physical link(s).

Accordingly, in order for an SSP to connect to the signaling network, dedicated physical SS7 links (expensive communication grade cables) must be run between the associated multiplexer and each remotely located STP. The new or expanding provider can either install new cables, or lease a predetermined, fixed-bandwidth on existing lines from a network service provider. Moreover, the provider must lease the maximum bandwidth which would otherwise be required during peak calling periods, regardless of how small the bandwidth needed during normal calling periods.

Similarly, when a cellular service provider enters a new geographic area or market, the cellular service provider must connect the elements of the cellular radiotelephone network to the wired telephone network using SS7 links.

In any case, such dedicated SS7 links are typically very expensive, whether installing or leasing, and can represent a recurring cost of as much as $10,000 per month. Such high costs present a problem for existing carriers and service providers, as well as for new carriers and service providers looking to enter the marketplace. The large number of SS7 links that must be provided can thus increase the expansion or introduction costs for wired and wireless networks, thereby increasing consumer cost and/or reducing consumer access to competitive service providers.

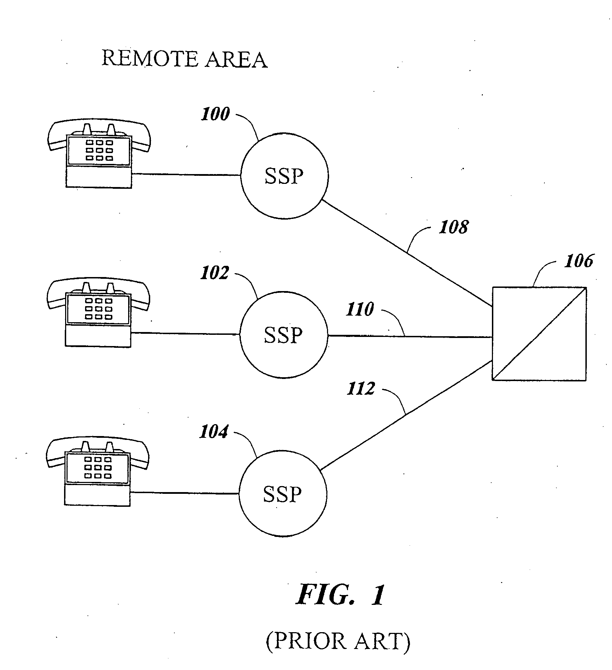

One scenario in which providing dedicated, fixed-bandwidth SS7 links is particularly inefficient is connecting telephone end offices in sparsely-populated areas to an STP. For example, referring to Figure 1, SSPs **100, 102,** and **104** may be located in a sparsely-populated area remote from an STP. Hence, the SS7 signaling bandwidth requirements to and from each SSP is small, i.e., requiring only a fraction of the 56 kbps provided by a conventional SS7 link. However, in conventional SS7 networks, each SSP **100, 102,** and **104** is required to connect to STP **106** through fixed-bandwidth SS7 access links **108, 110,** and **112.**

Even though SSPs **100, 102,** and **104** use only a fraction of the bandwidth provided by access links **108, 110,** and **112,** the owners of SSPs **100, 102,** and **104** are required to pay for the full amount of bandwidth provided by access links **108, 110,** and **112.** Hence, providing SS7 signaling services to end offices in sparsely populated areas is not cost effective using conventional fixed-bandwidth SS7 links. The cost is further increased if the fixed-bandwidth links span long geographic distances.

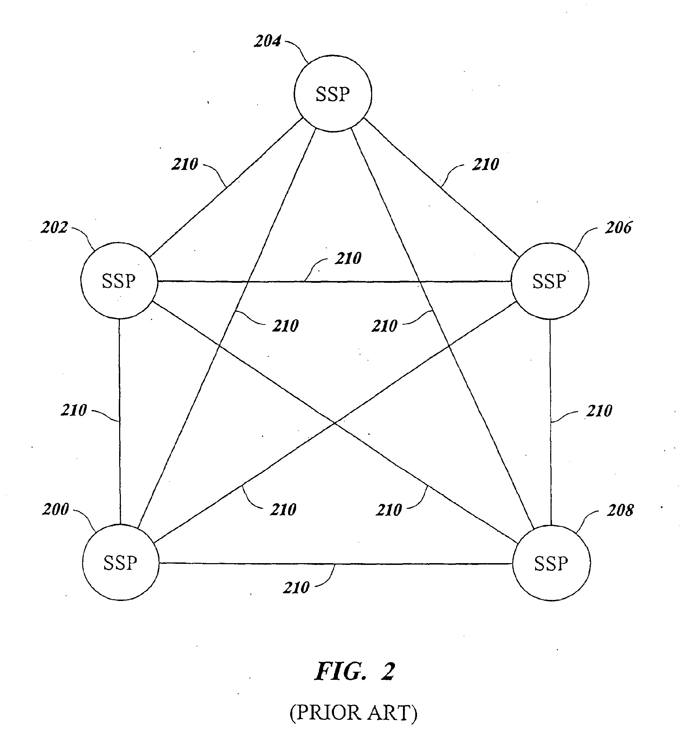

Another configuration in which using conventional fixed-bandwidth SS7 links is inefficient is in mesh networks used to connect end offices. Referring to Figure 2, each of the SSPs **200 - 208** is connected to all of the other SSPs using fixed-bandwidth SS7 links **210.** Such a configuration is commonly used in European countries. In a mesh network with n SSPs, n fixed-bandwidth links must be added to the network for each additional SSP added to the network. For example, in Figure 2, there are five SSPs. In order to add a sixth SSP, five fixed-bandwidth SS7 signaling links are required to connect a sixth SSP to each existing SSP in the network. In order to add a seventh SSP to a mesh network of six SSPs, six additional fixed-bandwidth links are required. Such a scheme can make adding new SSPs to a mesh network cost-prohibitive due to the cost of each fixed-bandwidth link. Relevent prior art documents are WO 97/42774, EP-A-0853411, and IETF document "SS7 to IP signelling gateway Tranpor Architecture" of November 11, 1998.

Accordingly, there exists a need for novel methods and systems for interconnecting SS7 SPs that reduces the number of fixed-bandwidth SS7 links.

### Disclosure of the Invention

The present invention includes an edge device, according to claim 10, and a method according to claim 1, for interconnecting SS7 SPs using an edge device. As used herein, the term edge device refers to a switching node that reduces the need for providing fixed-bandwidth signaling links over long geographic distances to interconnect SS7 SPs. The reason that the device is referred to as an edge device is that it is particularly well suited for use at the edge of a physical network, such as at a group of SSPs located remotely from an STP. However, as will be described in more detail below, the edge device according to the present invention is not limited to use at the edge of a network. The edge device according to the present invention can be used to interconnect SS7 SPs in a variety of configurations, including mesh networks, that are not necessarily located at the edge of a physical network.

According to one aspect of the invention, a plurality of SS7 signaling points are connected to an edge device using fixed-bandwidth SS7 signaling links. The edge device is connected to an SS7/IP gateway using a variable-bandwidth signaling link. The edge device multiplexes messages sent over the fixed-bandwidth signaling links and sends the multiplexed messages to the SS7/IP gateway over the variable-bandwidth signaling link.

According to another aspect, the present invention includes a method for replacing inter-SSP fixed-bandwidth connections in a mesh network with variable-bandwidth signaling links. In a mesh network, first and second SPs are connected to a first edge device using fixed-bandwidth SS7 signaling links. Third and fourth SPs are connected to a second edge device using third and fourth fixed-bandwidth SS7 signaling links. The first edge device is connected to the second edge device using a variable-bandwidth signaling link.

According to yet another aspect, the present invention includes an edge device having simplified message transfer part (MTP) routing functionality. In such an edge device, if an incoming SS7 message is directed to an SS7 node directly connected to the edge device, the message is routed to that node. Otherwise, the message is routed to an SS7/IP gateway. Alternatively, the edge device may be configured to route all messages over the variable-bandwidth signaling link, even further simplifying the MTP routing.

Embodiments of the present invention will be explained below in terms of modules or processes. It is understood that these modules or processes may be implemented in hardware, software, or a combination of hardware and software. Accordingly, embodiments of the invention may be implemented as computer program products comprising computer-executable instructions embodied in a computer-readable medium for performing steps. These embodiments may also include appropriate hardware programmed to execute the instructions and perform the steps. Exemplary hardware suitable for use with embodiments of the present invention includes a microprocessor, such as a Pentium^{®} processor available from Intel Corporation.

Accordingly, it.is an object of the present invention to provide an edge device that reduces the number of fixed-bandwidth SS7 signaling links in a telecommunications signaling network.

It is yet another object of the invention to provide a method for interconnecting SS7 SPs using an edge device.

These and other objects of the present invention are achieved, in whole or in part, by the present invention. Having stated some of the objects of the invention hereinabove, other objects will become evident as the description proceeds when taken in connection with the accompanying drawings as best described hereinbelow.

### Brief Description of the Drawings

The present invention will now be explained with reference to the accompanying drawings of which:
Figure 1 is a block diagram illustrating a conventional SS7 network in which SPs are interconnected using fixed-bandwidth SS7 links;
Figure 2 is a block diagram illustrating a conventional mesh network in which SPs are interconnected using fixed-bandwidth SS7 links;
Figure 3 is a block diagram illustrating a method for interconnecting SS7 SPs using an edge device according to an embodiment of the present invention;
Figure 4 is a block diagram of an edge device for interconnecting SS7 SPs using variable-bandwidth signaling links according to an embodiment of the present invention;
Figure 5(a) is a block diagram of a preferred packet format usable by an edge device for encapsulating a TCAP message according to an embodiment of the present invention;
Figures 5(b) and 5(c) are block diagrams of a preferred packet format usable by an edge device for encapsulating ISUP messages according to embodiments of the present invention;
Figure 6(a) illustrates an MTP routing table usable by an edge device for internally routing messages according to an embodiment of the present invention;
Figure 6(b) is a flow chart illustrating an exemplary MTP routing algorithm according to an embodiment of the present invention;
Figure 7 is a block diagram illustrating a method for interconnecting SS7 SPs in a mesh network using edge devices according to an embodiment of the present invention;
Figure 8 is a block diagram illustrating a method for interconnecting a plurality of mesh networks using edge devices and an SS7/IP gateway according to an embodiment of the present invention; and
Figure 9 is an MTP routing table usable by edge device **814** illustrated in Figure 8.

### Detailed Description of the invention

As stated above, interconnecting SS7 SPs using fixed-bandwidth SS7 signaling links can be inefficient and cost-prohibitive, especially when bandwidth is under-utilized or when multiple links spanning long geographic distances are required. Accordingly, embodiments of the present invention include methods and systems for interconnecting SS7 SPs using an edge device located proximally to at least some of the SPs. The edge device connects the SPs to other distant SPs using variable-bandwidth links, such as transmission control protocol/internet protocol (TCP/IP) links or user datagram protocol/internet protocol (UDP/IP) links. The bandwidth available to a given TCP/IP link or a UDP/IP link varies as a function of network usage by other nodes. Thus, nodes in a TCP/IP or UDP/IP network share network bandwidth with other nodes. As a result, the cost of connecting SS7 network elements using TCP/IP or UDP/IP signaling links is less expensive than using dedicated, fixed-bandwidth SS7 links. In addition, in a variable-bandwidth environment, such as TCP/IP, bandwidth not in use by one node will automatically be utilized by another node.

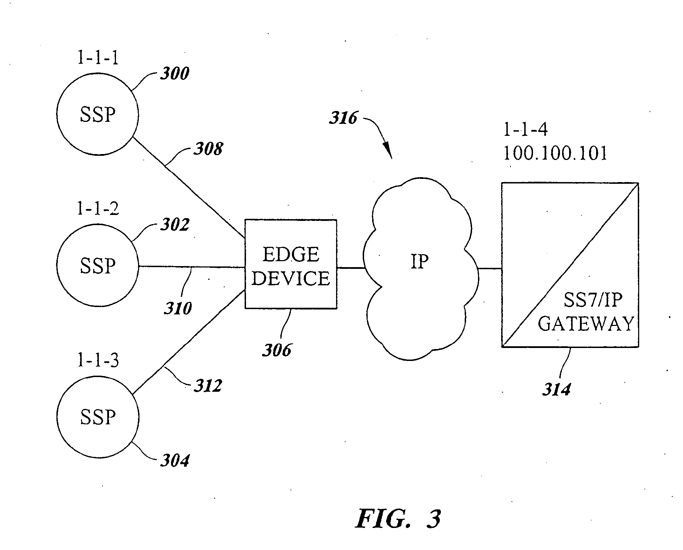

Figure 3 illustrates a method for interconnecting SS7 SPs using an edge device according to an embodiment of the present invention. In Figure 3, SSPs **300, 302,** and **304** are connected to edge device **306** through fixed-bandwidth SS7 signaling links **308, 310,** and **312.** For example, fixed-bandwidth SS7 signaling links **308, 310,** and **312** may comprise 56 kbps access links. Edge device **306** is preferably located proximally to SSPs **300, 302,** and **304** to reduce the cost of providing fixed-bandwidth signaling links **308, 310,** and **312.**

Edge device **306** is connected to SS7/IP gateway **314** using variable-bandwidth signaling link **316.** In a preferred embodiment, variable-bandwidth signaling link **316** comprises an IP link, such as a TCP/IP signaling link or a UDP/IP signaling link. Using a variable-bandwidth signaling link to connect SSPs **300, 302,** and **304** to SS7/IP gateway **314** greatly reduces the cost of connecting SSPs **300, 302,** and **304** to the signaling network. The owners of SSPs **300, 302,** and **304** are no longer required to purchase fixed units of bandwidth, such as 56 kbps, to connect to SS7/IP gateway **314.** Instead, the owners of SSPs **300, 302,** and **304** can share bandwidth and costs of variable-bandwidth signaling link **316.**

Edge device **306** may or may not have an SS7 point code. In an embodiment in which edge device **306** does not have a point code, messages from SSPs **300, 302,** and **304** may be addressed to a point code of SS7/IP gateway **314** or other connected node.

SS7/IP gateway **314** may include SS7 switching functionality similar to that of a conventional signal transfer point. In addition, SS7/IP gateway may also include functionality for processing IP-encapsulated SS7 messages and for encapsulating SS7 messages in IP datagrams. An SS7/IP gateway suitable for use with embodiments of the present invention is the IP⁷ Secure Gateway^{™} available from Tekelec, Inc. of Calabasas, California.

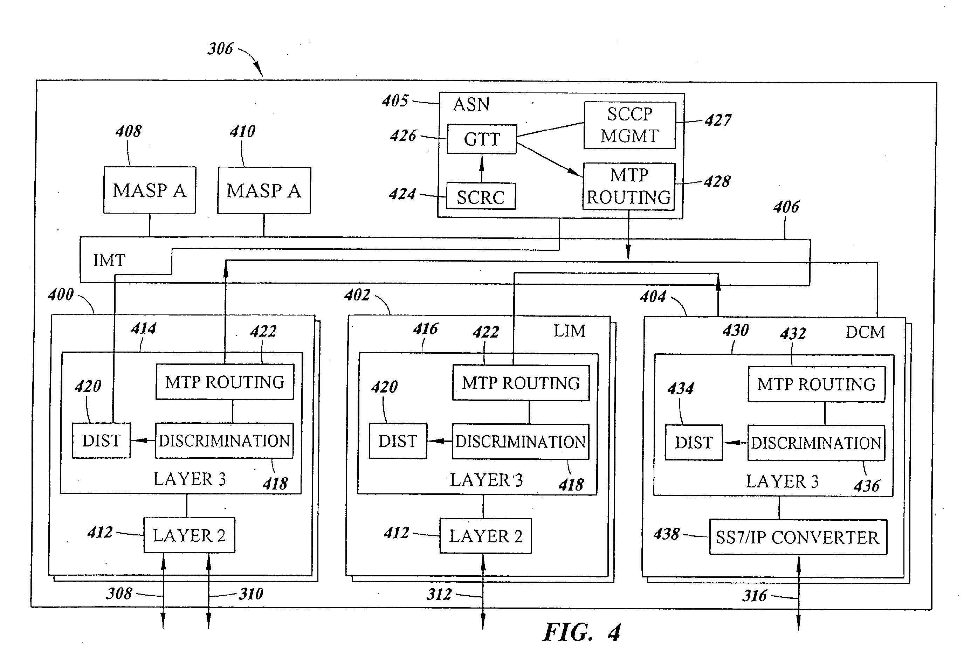

Figure 4 is a block diagram of edge device **306.** In Figure 4, edge device **306** includes link interface modules (LIMs) **400** and **402** for sending and receiving SS7 formatted messages over fixed-bandwidth signaling links **308, 310,** and **312.** In the illustrated embodiment, LIM **400** is coupled to fixed-bandwidth signaling links **308** and **310** and LIM **402** is coupled to fixed-bandwidth signaling link **312.** Database communication module (DCM) **404** is capable of sending and receiving messages over variable-bandwidth signaling link **316.** Interprocessor message transport (IMT) bus **406** transports messages between LIMs **400** and **402** and DCM **404.** ASM **405** provides global title translation services for incoming SS7 messages. Maintenance and administration subsystem processors (MASPs) **408** and **410** control maintenance and database administration activity for edge device **306.** Each of the components of edge device **306** will now be discussed in more detail.

LIMs **400** and **402** each include hardware, such as a microprocessor and associated memory, for executing and storing programs for processing SS7 messages. In the illustrated embodiment, LIMs **400** and **402** each include SS7 level 2 processes for performing SS7 level 2 functions on incoming and outgoing SS7 messages. For example, SS7 level 2 process **412** ensures that Level 3 data is transmitted and received on the links without any errors. It also ensures that messages are received in the same order it was sent.

MTP level 3 processes **414** and **416** each include message discrimination functions **418,** message distribution functions **420,** and MTP routing functions **422.** Message discrimination functions **418** receive incoming SS7 messages from the layer 2 processes and determine whether the messages can be routed solely based on the MTP routing label in the messages or whether global title translation is required. If message discrimination functions **418** determine that messages can be routed based on MTP routing labels, message discrimination functions **418** pass the messages to MTP routing functions **422.** MTP routing functions **422** read the destination point code in the message and transmit the message to the appropriate LIM or DCM address assigned to that point code. Edge device **306** may be configured to route all non-local messages to SS7/IP gateway **314** illustrated in Figure 1. As a result, routing is greatly simplified, as will be discussed in more detail below.

If discrimination function **418** determines that global title translation is required, discrimination function **418** passes the message to distribution function **420.** Distribution function **420** routes the message to ASM **405** for global title translation. ASM includes hardware, such as a microprocessor and associated memory, for executing and storing programs for performing global title translation for SS7 messages. In the illustrated embodiment, ASM **405** includes SCCP routing control (SCRC) process **424** for performing global title translation on incoming messages using global title translation database **426.** The result of global title translation is a new destination point code for the message. Once global title translation is performed, and the new destination point code is inserted in the message, the message is passed to MTP routing function **428,** which routes the message to the appropriate LIM or DCM address based on the newly-inserted destination point code. SCCP management function **427** manages global title translation data in GTT database **426.**

DCM **404** includes hardware, such as a microprocessor and associated memory, for executing and storing programs for converting messages from SS7 format to TCP/IP format, and vice versa. DCM **404,** like LIMs **400** and **402** includes SS7 layer 3 functions **430.** SS7 layer 3 functions **430** include MTP routing function **432,** discrimination function **434,** and distribution function **436.** The SS7 layer 3 functions **430** are the same as those described with respect to LIMs **400** and **402.** Hence, a description thereof is not repeated herein.

Unlike LIMs **400** and **402,** DCM **404** includes SS7/IP converter **438** that sends and receives IP-encapsulated SS7 messages over variable-bandwidth length **316.** For incoming IP-encapsulated SS7 messages, SS7/IP converter **438** strips the IP header and the TCP or UDP header from the message. SS7/IP converter **438** then passes the SS7 message contained in the data portion of the IP packet to SS7 layer 3 process **430.** For outgoing messages, SS7/IP converter **438** receives SS7 messages from LIMs **400** and **402** and ASM **405,** strips at least a portion of the MTP layers 1 and 2 information from the SS7 messages, adds TCP and IP headers to the messages. Alternatively, SS7/IP converter **438** may encapsulate the entire SS7 message in an IP datagram. Whether or not the entire message or a portion of the message is encapsulated depends on the SS7 message type. For example, if the SS7 message is an ISDN user part (ISUP) message, it may be desirable to retain the SS7 layer 2 information in the packet. Alternatively, if the SS7 message is a TCAP message, it may be desirable to strip the SS7 layer 2 information from the message.

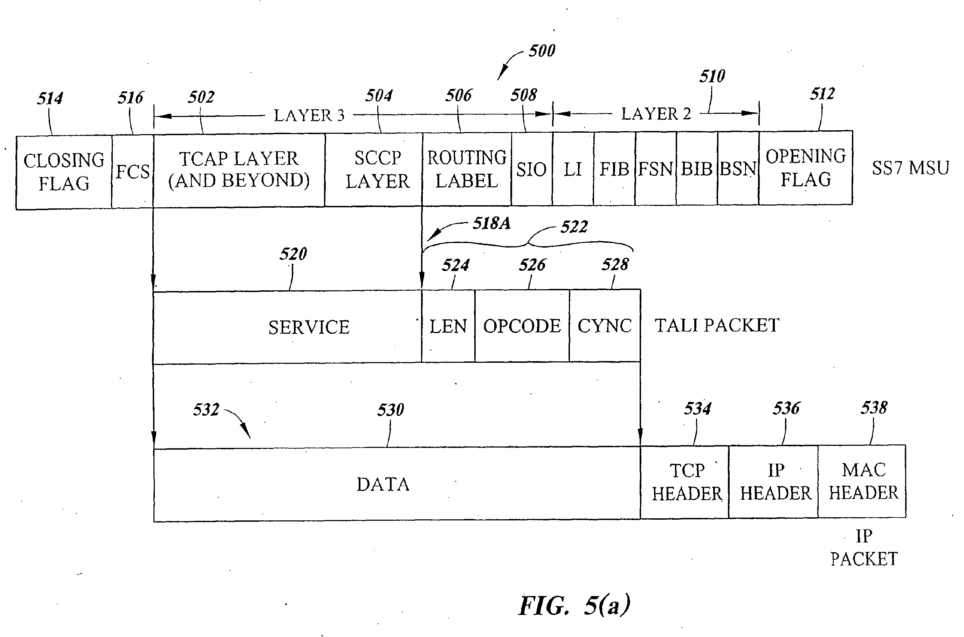

Figures 5(a) - 5(c) illustrate preferred packet formats for encapsulating TCAP and ISUP messages in TCP/IP packets. Figure 5(a) illustrates a preferred packet format for encapsulating TCAP messages in TCP/IP packets. In Figure 5(a), SS7 MSU **500** includes TCAP layer information **502,** SCCP layer information **504,** routing label **506,** SIO **508,** SS7 layer 2 information **510,** opening and closing flags **512** and **514,** and frame check sequence **516.**

A portion of SS7 MSU **500** is encapsulated in transport adapter layer interface (TALI) packet **518.** In particular, for an incoming SS7 MSU, MTP layer 2 information **510,** opening and closing flags **512** and **514,** and frame check sequence **516** are discarded. The destination point code from MTP routing label **506** is placed into the called party address field of SCCP layer **504.** The calling party address field is created if it does not exist and then filled. The OPC from routing label **506** is placed into the calling party address field of SCCP layer **504** if there is no calling party point code. The modified SCCP layer **504** and TCAP layer **502** are then placed in service field **520** of TALI packet **518.** TALI packet **518** includes a header **522** including a length field **524,** and opcode field **526** and a sync field **528.** Length field **524** indicates the length of service field **520** of TALI field **518.** Opcode field **526** specifies the payload type, which is TCAP. Sync field **528** is used for synchronization.

TALI packet **518** is encapsulated in data portion **530** of IP packet **532.** IP packet **532** includes TCP header **534,** IP header **536,** and MAC header **538..**

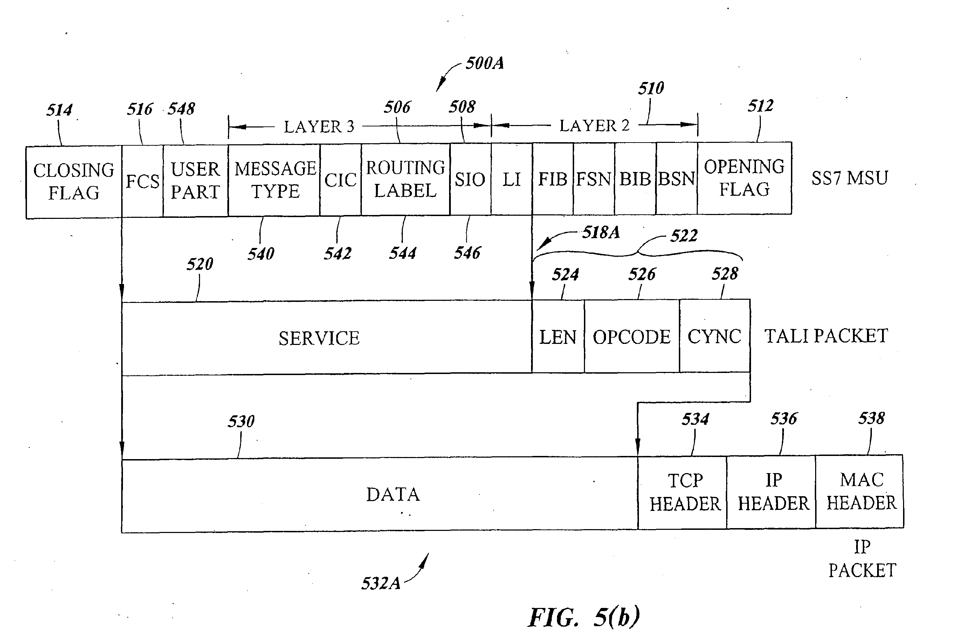

Figure 5(b) illustrates a preferred packet format for encapsulating SS7 user part messages in Internet protocol packets according to an embodiment of the present invention. In Figure 5(b), SS7 MSU generally designated **500A** is encapsulated in transport adapter layer interface (TALI) packet generally designated **518A,** which is in turn encapsulated in IP packet **532A.** More particularly, the layer 3 information in SS7 MSU **500A,** including message type field **540,** circuit information code field **542,** routing label **544,** and service information octet **546** is encapsulated in service field **520** of TALI packet **518A.** User part field **548** is also encapsulated in service field **520.** The remaining portions of the SS7 MSU are preferably discarded.

TALI packet **518A,** in addition to the SS7 layer 3 information, includes length field **524,** opcode field **526,** and sync field **528.** Length field **524** specifies the length of the data in service field **520** of TALI packet **518A.** Opcode field **526** specifies an SS7 message type. In this example, the opcode field would specify an SS7 user part message type such as ISUP, TUP, or BISUP. Sync field **528** indicates the start of a packet. Sync field **528** is useful in determining packet boundaries in TCP streams if the value in the length field **524** is incorrect.

TALI packet **518A** is encapsulated in data field **530** of IP packet **532A.** TCP header field **534** includes TCP header information, such as TCP port numbers, for bidirectional user part message communication. IP header field **536** includes IP header information such as source and destination IP addresses, for TCP/IP segment **532A.** Finally, MAC header field **538** includes physical and network information for delivering the IP packet **532A** over a physical network.

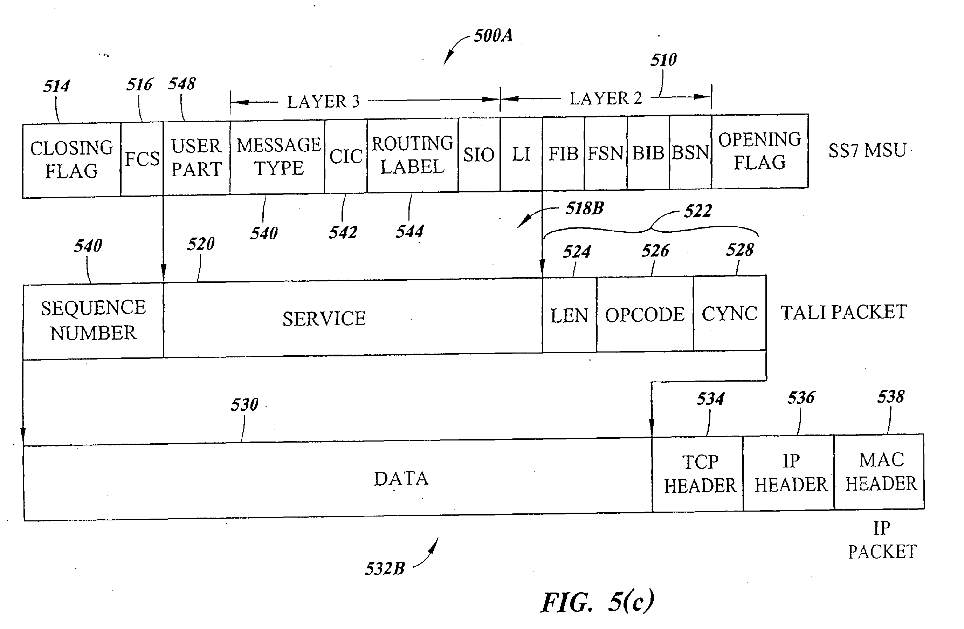

Figure 5(c) illustrates an alternative data structure for encapsulating an SS7 user part message in an IP packet according to an embodiment of the present invention. The data structure illustrated in Figure 5(c) provides increased reliability using message sequencing and retrieval. In Figure 5(c), SS7 MSU **500** is the same as the SS7 MSU **500A** illustrated in Figure 5(b). TALI packet generally designated **518B** however, is different from TALI packet **518B** illustrated in Figure 5(b). In particular, TALI packet **518B** includes an application-level sequence number field **540** for sequencing IP packets between SS7 signaling points. In the illustrated embodiment, application-level sequence number field **540** is included as a trailer to TALI packet **518B.** In an alternative embodiment, application-level sequence number field **540** can be included as a header to TALI packet **518B** or at any other location in TALI packet **518B.** Application-level sequence number field **540** provides a sequence number of a TALI packet in a communication between SS7 signaling points.

IP packet **532B** includes data field **530** that includes TALI packet **518B.** Data field 530 thus includes application-level sequence number field **540.** The remaining fields in IP packet **532B** are the same as those illustrated in Figure 5(b) and need not be further described.

Referring back to Figure 3, edge device **306** functions as a simplified, high-speed signal transfer point in which SS7 messages for local nodes, i.e., SSPs **300, 302,** and **304** are routed locally over SS7 links **308, 310,** and **312.** All other messages originating from SSPs **300, 302,** and **304** are multiplexed and sent over variable-bandwidth signaling length **316.** By "multiplexed", it is meant that messages received over SS7 signaling links **308, 310,** and **312** are sent over a single TCP/IP connection established between edge device **306** and SS7/IP gateway **314.** TCP software on edge device **306** performs the multiplexing automatically by sending data in the order in which it is received from MTP layer 3 software **436** illustrated in Figure 4. This multiplexing provides more efficient use of network bandwidth than conventional SS7 networks. For example, in a typical case, only 40% of the available bandwidth on SS7 signaling links **308, 310,** and **312** may be utilized. Concentrating these three under-utilized links onto a single, variable-bandwidth IP link reduces network operating and connectivity costs by providing a more efficient use of network bandwidth.

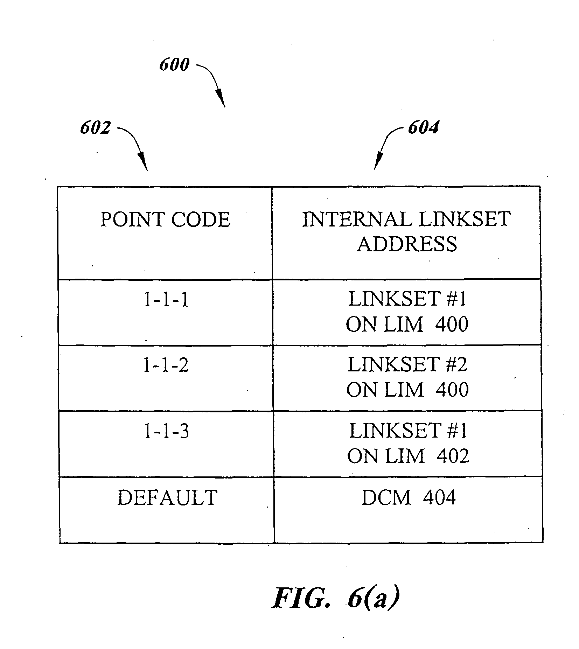

Figure 6(a) illustrates a simplified edge device MTP routing table according to an embodiment of the present invention. In Figure 6(a), each entry in MTP routing table **600** includes a point code field **602** and an internal link set address field **604.** Point code field **602** stores point codes to be compared to destination point codes extracted from SS7 messages. Internal link set address field **604** of each message specifies the logical entity within edge device **306** to which a message should be routed. For example, if an incoming message has a point code of 1-1-1, the message is routed to the address for link set number 1 on LIM **400.** Link set number **1** on LIM **400** corresponds to fixed-bandwidth SS7 signaling link **308,** which is coupled to SSP **300** illustrated in Figure 3. If the destination point code of an incoming message is 1-1-2, the message is routed to link set number 2 on LIM **400.** Link set number 2 on LIM **400** corresponds fixed-bandwidth SS7 signaling link **310,** which is coupled to SSP **302.** If the destination point code of an incoming message is 1-1-3, the message is routed to link set number 1 on LIM **402.** Link set number 1 on LIM **402** corresponds to fixed-bandwidth SS7 signaling link **312,** which is connected to SSP **304.** Thus, edge device **306** is capable of intelligently performing local routing operations without consulting an STP.

If an incoming message is directed to any point code other than one of the point codes of the locally-connected SSPs, the message is directed to DCM **404.** Accordingly, routing table **600** includes a default entry for DCM **404.** When DCM **404** receives a message, it automatically encapsulates the message in a TCP datagram, which is in turn encapsulated in an IP datagram, as described above. The destination IP address in the IP header will be 100.100.101, the IP address of SS7/IP gateway **314.** After encapsulating the SS7 message in the IP datagram, edge device **306** sends the message over variable-bandwidth link **316.** Because edge device **306** includes a simplified routing table with a default entry corresponding to the variable-bandwidth link, MTP message routing functions included in edge device **306** are greatly simplified over a conventional STP. As a result, the MTP routing time is shorter than that of a conventional STP.

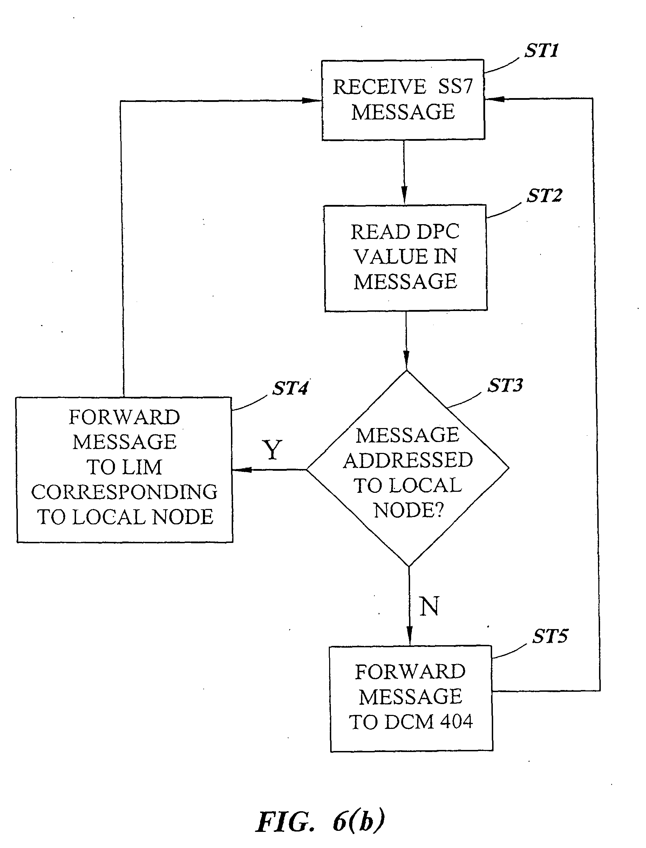

Figure 6(b) illustrates an exemplary MTP routing algorithm performed by MTP routing functions **420, 422, 428,** and **432** of edge device **306** illustrated in Figure 4. In step **ST1**, the MTP routing software receives an SS7 message. The SS7 message may have originated from one of SSPs **300, 302,** and **304** illustrated in Figure 3, from SS7/IP gateway **314,** or from a node connected to SS7/IP gateway 314. In step **ST2,** the MTP routing software reads the destination point code value in the message. In step **ST3,** the MTP routing software determines whether the message is directed to one of the locally-connected SS7 nodes. This determination may be made by performing a lookup in a routing table, as illustrated in Figure 6(a) or an equivalent algorithm. In step **ST4,** if the MTP routing software determines that the message is directed to a locally-connected node, then the MTP routing software forwards the message to the address on the appropriate LIM corresponding to that node. If the MTP routing software determines that the message is not directed to one of the locally-connected nodes, the MTP routing software forwards the message to DCM **404.** Thus, the MTP routing software of the edge device is simplified over that of a conventional STP.

The MTP routing time in edge device **306** can be further simplified if local routing functionality is disabled. For example, it may be desirable to have a single-entry routing table in which all messages directed to all point codes are routed to SS7/IP gateway **314** illustrated in Figure 3. In such a configuration, MTP routing time is even further decreased because all incoming SS7 messages are routed to DCM **404** to be sent over variable-bandwidth signaling link **316.** However, while this configuration may be efficient for non-locally-directed messages, there is a decrease in efficiency for locally-directed messages because these messages travel from a local node, through edge device **306,** through SS7/IP gateway **314,** back to edge device **306,** and to the other local node. Whether this configuration is desirable depends on the relative volume of locally-directed messages to non-locally directed messages and the relative latency of having local routing versus not having local routing.

Another feature/advantage of edge device **306** according to the present embodiment is that the edge device is capable of filtering certain SS7 messages received over the fixed-bandwidth signaling links so that these messages are not transmitted over variable-bandwidth signaling link **316.** For example, referring again to Figure 3, edge device **306** receives SS7 messages over fixed-bandwidth SS7 signaling links **308, 310,** and **312.** These SS7 messages may include message signaling units (MSUs), link status signal units (LSSUs), and fill-in signal units (FISUs).

FISUs are transmitted between SS7 signaling points (SPs) during idle periods to monitor link status before a transmission occurs. LSSUs are transmitted between SS7 SPs to verify the status of the link on which the LSSUs are carried. MSUs carry higher protocol types, such as ISUP, TCAP, and mobile application part (MAP).

Since LSSUs and FISUs consume link bandwidth and may only be of interest to SS7 signaling points connected via SS7 signaling links, it may be desirable to filter LSSUs and FISUs from the SS7 messages that are encapsulated IP datagrams and forwarded over variable bandwidth signaling link **316.** Since MSUs contain information that may be used by gateway **314** and other nodes in performing call signaling and database functions, it may be desirable to pass MSUs to gateway **314.** Accordingly, edge device **306** may be adapted to filter LSSUs and FISUs incoming on signaling links **308, 310,** and **312** and pass MSUs in the incoming SS7 messages to gateway **314.** Such filtering may be performed by the LIM that receives the messages or the DCM that sends the messages out over variable-bandwidth signaling link **316.** By filtering LSSUs and FISUs incoming on the fixed-bandwidth signaling links, edge device **306** utilizes less bandwidth on variable bandwidth signaling link **316.** This allows more MSUs to be sent over variable bandwidth signaling link **316.**

### Mesh Network Configuration

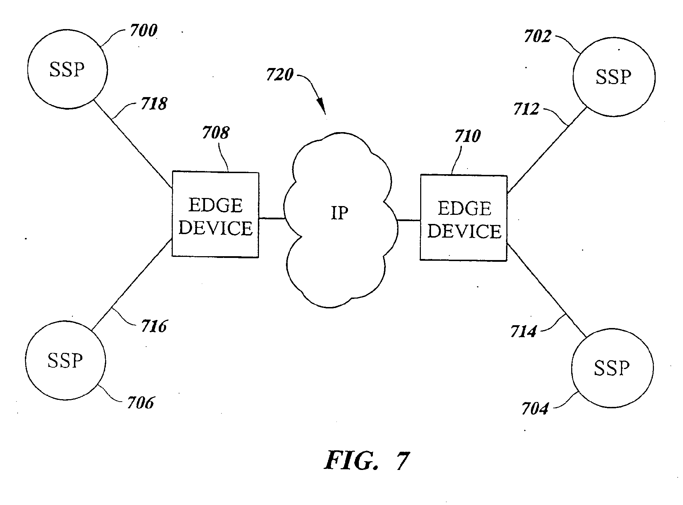

Figure 7 illustrates a method for connecting SS7 SPs in a mesh configuration using edge devices according to an embodiment of the present invention. In Figure 7, SS7 SSPs **700, 702, 704,** and **706** are connected in a mesh network to edge devices **708** and **710** using fixed-bandwidth SS7 signaling links **712, 714, 716,** and **718.** Unlike the conventional mesh network illustrated in Figure 2, only one fixed-bandwidth link is required per SSP to connect that SSP to the other SSPs. Edge devices **708** and **710** are connected using variable-bandwidth link **720.**

If it is desirable to add another SSP to the mesh network, only a single additional fixed-bandwidth SS7 signaling link is required to connect additional SSP to one of the edge devices **708** and **710.** If the edge device has sufficient link interface module cards, there is no need to even upgrade the hardware of the edge device. Alternatively, if the edge device requires a new link interface module, such a module can be easily installed simply by plugging a link interface module into the IMT bus illustrated in Figure 4. The system illustrated in Figure 7 can be contrasted with the prior art mesh network illustrated in Figure 2, where adding an additional SSP to a mesh network having n nodes required n additional fixed-bandwidth SS7 links. Thus, the edge device according to the present embodiment greatly reduces the cost of expanding a mesh network.

It will also be appreciated that in the event that any of the SSPs connected to edge device **708,** such as SSP **700** fails, edge device **708** will send an IP message to the edge device **710** instructing edge device **710** to stop any traffic destined to SSP **700.** If the link **718** is congested, edge device **708** will buffer the received traffic as much as possible. If the link remains congested for an extended period of time, resulting in the buffer being full at edge device **708,** it will send an IP message to the edge device **710** indicating to throttle the traffic destined to SSP **700.**

Accordingly, another embodiment of the invention includes monitoring the status of SS7 nodes connected to an edge device via fixed-bandwidth SS7 signaling links. Such monitoring may be performed using conventional SS7 mechanisms, such as examining FISUs and LSSUs on the fixed-bandwidth signaling link. In response to determining that a link is either down or congested, edge device **708** may instruct the node sending data to that link that the link is congested or down. If the link is congested, edge device **708** may buffer data and instruct the sending node to slow the flow of incoming IP-encapsulated SS7 messages. If the link is down, edge device **708** may instruct the sending node to stop sending messages to that link. The messages to stop or slow the flow of messages to a down or congested link may be sent over variable-bandwidth signaling link **720.**

The sending of link-congested and link-down messages from an edge device to a sending node is not limited to communication between edge devices, as illustrated in Figure 7. For example, these messages can be sent from an edge device to any other IP-capable node, such as SS7/IP gateway **314** illustrated in Figure 3.

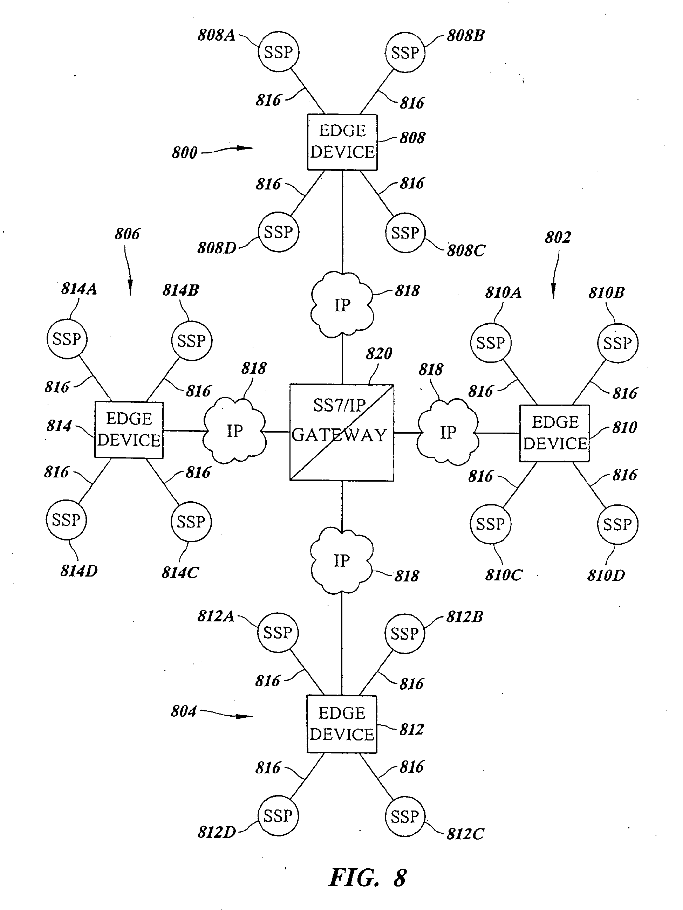

Figure 8 illustrates a method for interconnecting a plurality of mesh networks using edge devices according to an embodiment of the present invention. Referring to Figure 8, local mesh networks **800, 802, 804,** and **806** each include an edge device **808, 810, 812,** and **814.** Each of the edge devices **808, 810, 812,** and **814** is connected to four SSPs **808A-808D, 810A-810D, 812A-812D,** and **814A-814D,** respectively, via fixed-bandwidth SS7 links **816.** Edge devices **808, 810, 812,** and **814** are connected to each other via variable-bandwidth signaling links **818** through SS7/IP gateway **820**.

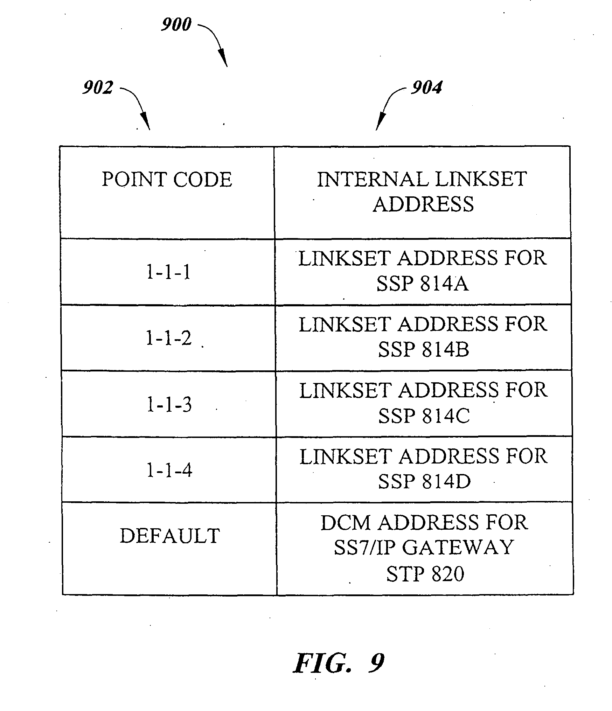

Each of the edge devices **808, 810, 812,** and **814** may be similar in hardware and software structure to edge device **306** illustrated in Figure 4. In addition, each of the edge devices may include simplified MTP routing tables, for example as illustrated in Figure 6. Figure 9 illustrates simplified MTP routing table that may be included in edge device **814** illustrated in Figure 8. In the MTP routing table illustrated in Figure 9, it is assumed that SSPs **814A-814D** illustrated in Figure 9 are assigned point codes 1-1-1, 1-1-2, 1-1-3, and 1-1-4, respectively. In Figure 9, routing table **900** includes a point code field **902** for specifying point codes to be compared with DPC values in incoming SS7 messages and an internal linkset address field for specifying the hardware address with edge device **814** to which the messages are to be routed. In the embodiment illustrated in Figure 9, routing table **900** includes LIM addresses corresponding to SS7 signaling links for all locally-connected SSPs. A default entry specifies that all messages that are destined for SSPs that are not connected to locally-connected nodes are routed to a DCM that corresponds to SS7/IP gateway **820.** This simplified table greatly decreases routing table processing time and provides an inexpensive alternative to having fixed-bandwidth SS7 signaling links interconnecting all the nodes in a mesh network. The MTP routing algorithm for edge device **814** is similar to the algorithm illustrated in Figure 6(a). Hence, a description thereof is not repeated herein. Because the routing table of edge device **814** is simplified over the routing algorithm of a conventional STP, MTP routing time can be greatly decreased.

As discussed above with respect to Figure 6(a), in an alternative embodiment, the MTP routing table may be collapsed into a single entry so that all messages are routed through SS7/IP gateway **820.** In such an embodiment, MTP routing time for non-locally-directed messages will be decreased, while routing time for locally-directed messages will be increased.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A method for interconnecting SS7 signaling points, SPs, the method comprising:
(a) connecting a first interface of an edge device to a plurality of signaling points, SPs, using a plurality of fixed-bandwidth SS7 signaling links, wherein the plurality of signaling points include service switching points, SSPs;
(b) connecting a second interface of the edge device to an IP-capable node using a variable-bandwidth signaling link; and
(c) multiplexing ISDN user part, ISUP, messages received from the SPs received over the fixed-bandwidth SS7 signaling links and transmitting the multiplexed ISUP messages to the IP-capable node over the variable-bandwidth signaling link.

2. The method of claim 1 wherein multiplexing ISUP messages received from the SPs includes encapsulating the ISUP messages in IP datagrams and forwarding the IP datagrams over the variable-bandwidth signaling link.

3. The method of claim 2 wherein encapsulating the ISUP messages in IP datagrams includes encapsulating the ISUP messages in transport adapter layer interface packets and encapsulating the transport adapter layer interface packets in transmission control protocol, TCP, segments.

4. The method of claim 3 wherein encapsulating the ISUP messages in transport adapter layer interface packets includes adding an application-level sequence number to each transport adapter layer interface packet.

5. The method of claim 1 wherein multiplexing ISUP messages received from the SPs includes performing MTP routing for the ISUP messages to direct all of the ISUP messages to the variable-bandwidth signaling link.

6. The method of claim 1 wherein multiplexing ISUP messages received from the SPs includes performing MTP routing for the ISUP messages to determine whether the ISUP messages are directed to locally-connected nodes and in response to determining that the ISUP messages are not directed to locally-directed nodes, routing the ISUP messages over the variable-bandwidth signaling link.

7. The method of claim 6 comprising, in response to determining the ISUP messages are directed to locally-connected nodes, routing the ISUP messages to the locally- " connected nodes over one of the fixed-bandwidth SS7 signaling links.

8. The method of claim 6 wherein performing MTP routing on the ISUP messages includes extracting destination point code, DPC, values from the ISUP messages and comparing the DPC values to point code values stored in a routing table.

9. The method of claim 1 wherein the IP-capable node is an SS7/IP gateway.

10. An edge device comprising:
(a) a first interface for receiving SS7 message signal units, MSUs, over fixed-bandwidth SS7 signaling links, wherein the SS7 MSUs include ISDN user part, ISUP, messages;
(b) a second interface for multiplexing the SS7 MSUs received by the first interface and transmitting the SS7 MSUs over a variable-bandwidth signaling link; and
(c) a message transfer part, MTP, routing function for determining whether the SS7 MSUs received by the first interface are directed to a locally-connected SS7 signaling point, and, in response to determining that the MSUs are not directed to a locally-connected SS7 signaling point, routing the messages to the second interface to be transmitted over the variable-bandwidth signaling link, wherein the locally-connected SS7 signaling point includes a service switching point, SSP).

11. The edge device of claim 10 wherein the first interface is a link interface module, LIM, having SS7 layer 2 and layer 3 processes.

12. The edge device of claim 10 wherein the second interface is a database communications module, DCM, having an SS7 layer 3 process and an SS7/IP converter process for converting SS7 MSUs to TCP/IP format and forwarding the SS7 MSUs over the variable-bandwidth signaling link.

13. The edge device of claim 12 wherein the DCM is adapted to forward all outgoing SS7 MSUs to a first SS7/IP gateway.

14. The edge device of claim 12 wherein the SS7/IP converter is adapted to encapsulate SS7 messages in transport adapter layer interface packets and to encapsulate the transport adapter layer interface packets in IP datagrams.

15. The edge device of claim 14 wherein the DCM is adapted to add an application-level sequence numbers to the transport adapter layer interface packets.

## Patentansprüche

1. Verfahren zur Verbindung von SS7-Signalisierungspunkten, SPs, untereinander, wobei das Verfahren aufweist:
(a) Verbinden einer ersten Schnittstelle eines Edge-Geräts mit einer Vielzahl von Signalisierungspunkten, SPs, unter Verwendung einer Vielzahl von SS7-Signalisierungsverbindungen mit fester Bandbreite, wobei die Vielzahl von Signalisierungspunkten Dienstevermittlungsstellen, SSPs umfasst;
(b) Verbinden einer zweiten Schnittstelle des Edge-Geräts mit einem IP-fähigen Knoten unter Verwendung einer Signalisierungsverbindung mit variabler Bandbreite; und
(c) Multiplexen von von den SPs empfangenen Nachrichten des ISDN-Benutzerteils, ISUP, die über die SS7-Signalisierungsverbindungen mit fester Bandbreite empfangen wurden, und Übermitteln der multiplexierten ISUP-Nachrichten an den IP-fähigen Knoten über die Signalisierungsverbindung mit variabler Bandbreite.

2. Verfahren nach Anspruch 1, wobei das Multiplexen der von den SPs empfangenen ISUP-Nachrichten das Verkapseln der ISUP-Nachrichten in IP-Datagramme und das Weiterleiten der IP-Datagramme über die Signalisierungsverbindung mit variabler Bandbreite umfasst.

3. Verfahren nach Anspruch 2, wobei das Verkapseln der ISUP-Nachrichten in IP-Datagramme das Verkapseln der ISUP-Nachrichten in Transportadapterschicht-Schnittstellenpakete und das Verkapseln der Transportadapterschicht-Schnittstellenpakete in Übertragungssteuerungsprotokoll (TCP)-Segmente umfasst.

4. Verfahren nach Anspruch 3, wobei das Verkapseln der ISUP-Nachrichten in Transportadapterschicht-Schnittstellenpakete das Hinzufügen einer Anwendungsebene-Laufnummer zu jedem Transportadapterschicht-Schnittstellenpaket umfasst.

5. Verfahren nach Anspruch 1, wobei das Multiplexen von von den SPs empfangenen ISUP-Nachrichten das Ausführen einer MTP-Leitweglenkung für die ISUP-Nachrichten umfasst, um alle ISUP-Nachrichten zu der Signalisierungsverbindung mit variabler Bandbreite zu leiten.

6. Verfahren nach Anspruch 1, wobei das Multiplexen von von den SPs empfangenen ISUP-Nachrichten das Ausführen einer MTP-Leitweglenkung für die ISUP-Nachrichten umfasst, um zu erkennen, ob die ISUP-Nachrichten zu örtlich angeschlossenen Knoten geleitet werden, und bei Erkennung, dass die ISUP-Nachrichten nicht zu örtlich angeschlossenen Knoten geleitet werden, das Leiten der ISUP-Nachrichten über die Signalisierungsverbindung mit variabler Bandbreite umfasst.

7. Verfahren nach Anspruch 6, aufweisend bei Erkennung, dass die ISUP-Nachrichten zu örtlich angeschlossenen Knoten geleitet werden, das Leiten der ISUP-Nachrichten zu den örtlich angeschlossenen Knoten über eine der SS7-Signalisierungsverbindungen mit fester Bandbreite.

8. Verfahren nach Anspruch 6, wobei das Ausführen der MTP-Leitweglenkung an den ISUP-Nachrichten das Extrahieren von Zielpunktcode(DPC)-Werten aus den ISUP-Nachrichten sowie das Vergleichen der DPC-Werte mit in einer Leitwegtabelle gespeicherten Punktcodewerten umfasst.

9. Verfahren nach Anspruch 1, wobei der IP-fähige Knoten ein SS7/IP-Gateway ist.

10. Edge-Gerät, aufweisend:
(a) eine erste Schnittstelle zum Empfangen von SS7-Nachrichtensignaleinheiten, MSUs, über SS7-Signalisierungsverbindungen mit fester Bandbreite, wobei die SS7-MSUs ISDN-Benutzerteil(ISUP)-Nachrichten umfassen;
(b) eine zweite Schnittstelle zum Multiplexen der von der ersten Schnittstelle empfangenen SS7-MSUs und Übermitteln der SS7-MSUs über eine Signalisierungsverbindung mit variabler Bandbreite; und
(c) eine Nachrichtentransferteil(MTP)-Leitwegfunktion zum Erkennen, ob die von der ersten Schnittstelle empfangenen SS7-MSUs zu einem örtlich angeschlossenen SS7-Signalisierungspunkt geleitet werden, und bei Erkennung, dass die MSUs nicht zu einem örtlich angeschlossenen SS7-Signalisierungspunkt geleitet werden, Leiten der Nachrichten zu der zweiten Schnittstelle zum Übermitteln über die Signalisierungsverbindung mit variabler Bandbreite, wobei der örtlich angeschlossene SS7-Signalisierungspunkt eine Dienstevermittlungsstelle, SSP, umfasst.

11. Edge-Gerät nach Anspruch 10, wobei die erste Schnittstelle ein Verbindungsschnittstellenmodul, LIM, ist, das SS7-Schicht-2- und -Schicht-3-Prozesse aufweist.

12. Edge-Gerät nach Anspruch 10, wobei die zweite Schnittstelle ein Datenbank-Kommunikationsmodul, DCM, mit einem SS7-Schicht-3-Prozess und einem SS7/IP-Konverterprozess zum Konvertieren von SS7-MSUs in ein TCP/IP-Format und Weiterleiten der SS7-MSUs über die Signalisierungsverbindung mit variabler Bandbreite ist.

13. Edge-Gerät nach Anspruch 12, wobei das DCM dazu geeignet ist, alle ausgehenden SS7-MSUs an ein erstes SS7/IP-Gateway weiterzuleiten.

14. Edge-Gerät nach Anspruch 12, wobei der SS7/IP-Konverter dazu geeignet ist, SS7-Nachrichten in Transportadapterschicht-Schnittstellenpakete zu verkapseln und die Transportadapterschicht-Schnittstellenpakete in IP-Datagramme zu verkapseln.

15. Edge-Gerät nach Anspruch 14, wobei das DCM dazu geeignet ist, den Transportadapterschicht-Schnittstellenpaketen Anwendungsebene-Laufnummern hinzuzufügen.

## Revendications

1. Procédé pour l'interconnexion de points de signalisation SS7, SP, le procédé comprenant :
(a) la connexion d'une première interface d'un dispositif périphérique à une pluralité de points de signalisation, SP, à l'aide d'une pluralité de circuits de signalisation SS7 à largeur de bande fixe, dans laquelle la pluralité de points de signalisation comprend des points de commutation de service, SSP ;
(b) la connexion d'une seconde interface du dispositif périphérique à un noeud compatible IP à l'aide d'un circuit de signalisation SS7 à largeur de bande variable ; et
(c) le multiplexage de messages de sous-système pour usager RNIS, ISUP, reçus des SP reçus par les circuits de signalisation SS7 à largeur de bande fixe et la transmission de messages multiplexés ISUP au noeud compatible IP par le circuit de signalisation SS7 à largeur de bande variable.

2. Procédé selon la revendication 1 dans lequel le multiplexage de messages ISUP reçus des SP comprend l'encapsulage des messages ISUP dans des datagrammes IP et la transmission des datagrammes IP par le circuit de signalisation SS7 à largeur de bande variable.

3. Procédé selon la revendication 2 dans lequel l'encapsulage des messages ISUP dans des diagrammes IP comprend l'encapsulage des messages ISUP dans des paquets d'interfaces entre couche d'un adaptateur de transport et l'encapsulage des paquets d'interfaces entre couche d'un adaptateur de transport dans des segments de protocole de commande de transmission, TCP.

4. Procédé selon la revendication 3 dans lequel l'encapsulage des messages ISUP dans les paquets d'interfaces entre couche d'un adaptateur de transport comprend l'ajout d'un numéro de séquence à niveau d'application à chaque paquet d'interfaces entre couche d'un adaptateur de transport.

5. Procédé selon la revendication 1 dans lequel le multiplexage de messages ISUP reçus des SP comprend l'exécution de l'acheminement de MTP pour les messages ISUP pour diriger tous les messages ISUP vers le circuit de signalisation SS7 à largeur de bande variable.

6. Procédé selon la revendication 1 dans lequel le multiplexage des messages ISUP reçus des SP comprennent l'exécution d'acheminement de MTP pour les messages ISUP pour déterminer si les messages ISUP sont dirigés vers les noeuds connectés localement et en réponse à la détermination selon laquelle les messages ISUP ne sont pas dirigés vers des noeuds dirigés localement, acheminant les messages ISUP par le circuit de signalisation à largeur de bande variable.

7. Procédé selon la revendication 6 comprenant, en réponse à la détermination selon laquelle les messages ISUP sont dirigés vers des noeuds localement connectés, l'acheminement des messages ISUP aux noeuds localement connectés par un des circuits de signalisation SS7 à largeur de bande fixe.

8. Procédé selon la revendication 6 dans lequel l'exécution d'acheminement de MTP sur les messages ISUP comprend l'extraction de valeurs de code de point de destination, DPC, provenant des messages ISUP et la comparaison des valeurs DPC avec des valeurs de code de point stockées dans une table d'acheminement.

9. Procédé selon la revendication 1 dans lequel le noeud compatible IP est une passerelle SS7/IP.

10. Dispositif périphérique comprenant :
(a) une première interface destinée à recevoir des unités de signalisation de message SS7, MSU, par des circuits de signalisation SS7 à largeur de bande fixe, dans laquelle les MSU SS7 comprennent des messages de sous-système pour usager RNIS, ISUP ;
(b) une seconde interface destinée à multiplexer les MSU SS7 reçues par la première interface et à transmettre les MSU SS7 par un circuit de signalisation SS7 à largeur de bande variable ; et
(c) une fonction d'acheminement de la partie transfert de message, MTP, destinée à déterminer si les MSU SS7 reçues par la première interface sont dirigées vers un point de signalisation SS7 connecté localement, et en réponse à la détermination selon laquelle les MSU ne sont pas dirigées vers un point de signalisation SS7 connecté localement, acheminant les messages vers la seconde interface à transmettre par le circuit de signalisation SS7 à largeur de bande variable, dans laquelle le point de signalisation SS7 connecté localement comprend un point de commutation de service, SSP.

11. Dispositif périphérique selon la revendication 10 dans lequel la première interface est un module d'interface de liaison, LIM, ayant des processus SS7 de couche 2 et de couche 3.

12. Dispositif périphérique selon la revendication 10 dans lequel la seconde interface est un module de communication à base de données, DCM, ayant un processus SS7 de couche 3 et un processus de conversion SS7/IP destiné à convertir des MSU SS7 en format TCP/IP et à transmettre les MSU SS7 par le circuit de signalisation à largeur de bande variable.

13. Dispositif périphérique selon la revendication 12 dans lequel le DCM est conçu pour transmettre toutes les MSU SS7 sortantes à une première passerelle SS7/IP.

14. Dispositif périphérique selon la revendication 12 dans lequel le convertisseur SS7/IP est conçu pour encapsuler les messages SS7 dans des paquets d'interfaces entre couche d'un adaptateur de transport et pour encapsuler les paquets d'interfaces entre couche d'un adaptateur de transport dans des diagrammes IP.

15. Dispositif périphérique selon la revendication 14 dans lequel le DCM est conçu pour ajouter des numéros de séquence à niveau d'application aux paquets d'interfaces entre couche d'un adaptateur de transport.
